# EUROPÄISCHE PATENTSCHRIFT

(11) **EP 2 896 118 B1**
(45) Veröffentlichungstag und Bekanntmachung des Hinweises auf die Patenterteilung: **03.08.2016**
(21) Anmeldenummer: 12773250.1
(22) Anmeldetag: 17.09.2012
(51) Int. Cl.: H02K 5/128, H02K 11/00, F04D 13/06

(54) **ELEKTRISCHE SPALTROHR- ODER SPALTTOPF-KÜHLMITTELPUMPE**
ELECTRICAL SPLIT-CAGE OR CANNED COOLANT PUMP
POMPE ÉLECTRIQUE POUR FLUIDE DE REFROIDISSEMENT, À TUBE À GAINE OU À POT À GAINE

(43) Veröffentlichungstag der Anmeldung: 22.07.2015
(73) Patentinhaber: Pierburg Pump Technology GmbH, 41460 Neuss (DE)
(72) Erfinder: ZACHER, Wolfgang, 04720 Döbeln (DE); PATZNER, Rene, 09337 Hohenstein-Ernstthal (DE)
(74) Vertreter: Patentanwälte ter Smitten Eberlein Rütten Partnerschaftsgesellschaft
(86) Internationale Anmeldenummer: PCT/EP2012/068219
(87) Internationale Veröffentlichungsnummer: WO 2014/040651

(56) Entgegenhaltungen:
- WO-A1-2007/116956
- DE-A1- 10 001 047
- JP-A- 2007 097 257
- US-A1- 2006 057 001
- US-A1- 2007 252 487

## Beschreibung

Die Erfindung betrifft eine elektrische Spaltrohr- oder Spalttopf-Kühlmittelpumpe mit einem elektrischen Antriebsmotor und einem Pumpenmodul.

Kühlmittelpumpen dienen allgemein der Förderung eines flüssigen Kühlmittels zur Kühlung eines Verbrennungsmotors, der Elektronik, einer Batterie, des Ladeluftkühlers, des Turboladers etc.. Das Pumpenmodul wird durch den elektrischen Antriebsmotor angetrieben. Der elektrische Antriebsmotor weist ein Spaltrohr bzw. einen Spalttopf auf, der einen Naßraum mit dem flüssigen Kühlmittel von einem Trockenraum trennt. In dem Naßraum rotiert ein permanent erregter Motorrotor, der auf einer Rotorwelle angeordnet ist. Der Naßraum ist durch den Spalttopf/ Spaltrohr von einem den elektronisch kommutierten Motorstator enthaltenen Trockenraum getrennt. Der Motorstator besteht aus mehreren Statorspulen. Für die Erfassung der rotatorischen Position des Motorrotors zur elektronischen Kommutierung ist im Trockenraum am Spalttopf ein zum Motorrotor beabstandeter Hallsensor vorgesehen.

Für eine hohe Regelungsqualität ist eine sehr genaue und reproduzierbare Positionierung des Hallsensors essentiell, da schon sehr kleine Abweichungen der Hallsensorposition von seiner Sollposition sowie vibratorische Bewegungen des Hallsensors während des Betriebes die elektronische Kommutierung negativ beeinflussen können.

Aus der Druckschrift CN 19 41 569 ist eine Spalttopfpumpe bekannt, welche eine Sensoraufnahme aufweist, auf welcher Magnetfeldsensoren für die Erfassung der Position des Motorrotors angeordnet sind. Die Sensoraufnahmeöffnung ist dabei parallel zur rotierenden Welle des Rotors ausgerichtet.

Die Druckschrift JP 2001 30 41 80 beschreibt ebenfalls eine Spalttopfpumpe mit vier Induktionssensoren zur Erfassung der Motorrotorposition. Die Sensoren sind im Bereich des Spalttopfes angeordnet.

Die den nächstkommenden Stand der Technik offenbarende Druckschrift US 2007/0252487 A1 zeigt eine elektrische Spalttopf-Kühlmittelpumpe mit einem Positionierelement 100, das den Haupt-Körper des Hallsensors einspannt.

Aufgabe der vorliegenden Erfindung ist es daher, eine konstruktiv einfach und preiswert herzustellende elektrische Spalttopf-Kühlmittelpumpe zu schaffen, bei der ein Hallsensor zur Erfassung der Motorrotorposition insbesondere auch an schwer zugänglichen Stellen besonders einfach, schnell und exakt positioniert sowie demontiert werden kann.

Diese Aufgabe wird erfindungsgemäß durch eine elektrische Spalttopf-Kühlmittelpumpe mit den Merkmalen gemäß Anspruch 1 gelöst. Bevorzugte Ausführungsformen und vorteilhafte Weiterbildungen ergeben sich aus den abhängigen Ansprüchen.

Eine Spalttopfpumpe, im Speziellen eine elektrische Spalttopf-Kühlmittelpumpe, weist einen elektrischen Antriebsmotor sowie ein Pumpenmodul auf. Das Pumpenmodul wird durch den elektrischen Antriebsmotor angetrieben. Der elektrische Antriebsmotor weist ein Spaltrohr, insbesondere einen Spalttopf, auf. Der Spalttopf grenzt einen mit einem flüssigen Kühlmittel gefüllten Naßraum von einem Trockenraum ab, der mit Umgebungsluft gefüllt sein kann. In dem Naßraum befindet sich ein umlaufender und permanent erregter Motorrotor. Im Trockenraum befindet sich ein elektronisch kommutierter Motorstator. An der sich im Trockenraum befindlichen Seite des Spalttopfes ist ein Hallsensor vorgesehen, der aus einem Sensorkopf und steifen Anschlussleitungen besteht.

Der an dem Spalttopf angebrachte Hallsensor dient der Aufgabe der präzisen Erfassung der Drehlage, der Drehzahl und/oder gegebenenfalls der Drehrichtung des Motorrotors, und liefert die Basisinformationen für die Motorregelung. In einer bevorzugten Ausführungsform werden die Signale des Hallsensors von einer Messvorrichtung erfasst und einer Regelvorrichtung zugeführt, welche über einen elektronischen Kommutator die Statorwicklungen entsprechend ansteuert.

In einer bevorzugten Ausführungsform ist ein Positionierungselement vorgesehen, das steife elektrische Anschlussleitungen aufweist. Die steifen elektrischen Anschlussleitungen des Positionierungselementes sind mit korrespondierenden Anschlussleitungen des Hallsensors verbunden, beispielsweise verschweißt. Die Positionierungselement- Anschlussleitungen werden von einem elektrisch isolierenden Verbindungskörper gehalten. An der Außenseite des Spalttopfes einerseits und an dem Verbindungskörper andererseits ist jeweils eine Formschlussstruktur vorgesehen, durch die der Verbindungskörper in einer definierten Position an dem Spalttopf fixiert ist.

Durch die beiderseitigen Formschlussstrukturen wird eine hohe Reproduktionsgenauigkeit bezüglich der Position des Hallsensors am Spalttopf realisiert. Durch die reproduzierbare und exakte Positionierung des Hallsensors wird eine zeitgenaue Kommutierung ermöglicht. Die zeitgenaue Kommutierung führt zu einer hohen Ausfallsicherheit, geringeren Leistungsaufschlägen für einen sicheren Betrieb und potentiell einer leistungsschwächeren Auslegung des Antriebsmotors.

Vorzugsweise befindet sich der Hallsensor zur Erfassung der Lage des Motorrotors radial zwischen dem Motorstator und dem Spalttopf.

Da das von der Kommutierungselektronik ausgehende Streufeld üblicherweise an den axialen Enden des Stators generiert wird, ist die Anordnung eines Hallsensors radial zwischen dem Motorstator und dem Motorrotor mit dem Vorteil verbunden, dass das Nutzsignal an dem Hallsensor relativ hoch ist. Hierdurch wird eine hohe Präzision und Auflösung des Messsignals erreicht.

In einer bevorzugten Ausführungsform werden die zum Hallsensor führenden Anschlussleitungen des Positionierungselementes durch einen sogenannten Stanzkamm gebildet. Die in Form eines Stanzkamms gebildeten Anschlussleitungen sind preiswert herstellbar, steif und weisen einen hohen Querschnitt zur störungsfreien Übertragung kleiner Signale auf.

Der Verbindungskörper ist vorzugsweise aus Kunststoff gespritzt. Der gespritzte Kunststoffkörper hält die Anschlussleitungen bzw. den Stanzkamm zusammen und bildet eine Positionier- Rast-Fixierung. Neben dem Zusammenhalten der Anschlussleitungen bzw. des Stanzkammes hat der Kunststoff ferner eine elektrisch isolierende Funktion. Der Kunststoff verhindert einen Stromfluss zwischen elektrischen Leitern bzw. gegenüber möglichen leitenden Materialien und dient zudem zu deren mechanischer Befestigung. Auf einfache Weise wird eine zuverlässige Positionierung und einfache Montage ermöglicht.

Der Verbindungskörper ist nach der Montage mit der komplementären Formschlussstruktur am Spalttopf verbunden. Diese komplementäre Formschlussstruktur am Spalttopf stellt also eine Haltevorrichtung für den Hallsensor dar.

Vorzugsweise sind an dem Spalttopf radiale Führungsstege für das Halten der Anschlussleitungen des Hallsensors vorgesehen. Die Führungsstege sind vorrangig einstückig mit dem Spalttopf ausgebildet.

Die radialen Führungsstege stellen, neben der Fixierung des Verbindungskörpers, eine weitere Fixierung in unmittelbarer Nähe des Sensorkopfes des Hallsensors dar. Durch die Führung der Anschlussleitungen des Hallsensors wird zum einen die Reproduktionsgenauigkeit bei der Positionierung des Sensorkopfes des Hallsensors verbessert. Zum anderen werden durch Vibration verursachte Bewegungen des Sensorkopfes, und hierdurch verursachte Störungen der Signalaufnahme nahezu ausgeschlossen.

Vorzugsweise sitzt der Sensorkopf des Hallsensors in einer Sensortasche, welche sich am Spalttopf befindet. Die Sensortasche wird mindestens aus zwei radialen Führungsstegen gebildet, die in Umfangsrichtung den Sensorkopf des Hallsensores fixieren. Durch diese Anordnung können Verschiebungen und Vibrationen des Sensorkopfes und Ungenauigkeiten bei der Kommutierung verhindert werden. Die Sensortasche stellt für den Sensorkopf des Hallsensors zudem eine mechanische Schutzfunktion dar.

Durch die Sensortasche wird zum einen eine höhere Reproduktions- Positionierungsgenauigkeit erzielt. Zum anderen wird eine bewegungsärmere und vibrationstolerantere Fixierung des Sensorkopfes des Hallsensors am Spalttopf realisiert.

Vorzugsweise sind die komplementäre Formschlussstruktur und/oder die Sensortasche und/oder die Führungsstege einstückig mit dem Kunststoff-Spalttopf ausgebildet. Die einstückig ausgeführten Profile haben ein im Wesentlichen biegesteifes Grundprofil.

Durch das Vorsehen der Einstückigkeit können größere Kräfte aufgenommen werden und ein Verbindungsvorgang ist nicht notwendig. Durch die Einstückigkeit wird zudem eine preiswertere Herstellung ermöglicht.

Vorzugsweise ist der Verbindungskörper formschlüssig und/oder kraftschlüssig und/oder materialschlüssig an der komplementären Formschlussstruktur des Spalttopfes fixiert. Alle drei Verbindungskategorien garantieren eine spielfreie Fixierung. Die material- und kraftschlüssige Verbindung garantiert zusätzlich eine Verliersicherheit des Positionselementes bzw. Verbindungskörpers.

In einer weiteren Ausführungsform greifen die Verbindungsleitungen des Stanzkammes in Ausnehmungen am Spalttopf derart ein, dass die formschlüssige Verbindung hergestellt ist. Hierdurch wird in einem einzigen Arbeitsschritt sowohl eine sichere Abgrenzung der einzelnen Leitungen voneinander als auch ihre Fixierung am Spalttopf realisiert, so dass eine einfache und preiswerte Montage ermöglicht wird.

Vorzugsweise ist eine Rastverbindung zwischen dem Hallsensor und der dazu komplementären Formschlussstruktur vorgesehen, die nach dem Zusammenfügen des Hallsensors in die komplementäre Formschlussstruktur wieder trennbar ist. Dies ermöglicht eine Demontage des Hallsensors, beispielsweise bei Ausfall des Hallsensors. Die Rastverbindung am Spalttopf ermöglicht es, das Positionierungselement schnell und wirksam an dem Spalttopf zu befestigen.

In bevorzugter Weise kann die formschlüssige Verbindung zwischen Hallsensor und Spalttopf durch ein sogenanntes thermisches Verstemmen, Warmstemmen oder eine Verklebung am Spalttopf ergänzt werden. Durch die beschriebene Verbindung wird eine exakte, einfache, robuste und unlösbare sowie kostengünstige Positionierung des Hallsensors zur Erkennung der Motorrotorlage der Spalttopf-Kühlmittelpumpe realisiert.

Bevorzugt ist die gesamte Einheit des Spalttopfmotors als ein Innenläufer realisiert, so dass der Motorrotor im Inneren des Spalttopfes angeordnet ist und der Motorstator auf der Außenseite der zylindrischen Spalttopfwand sitzt.

Im Folgenden wird ein Ausführungsbeispiel der Erfindung anhand der Figuren 1 bis 7 näher erläutert.
Figur 1 zeigt eine perspektivische Längsschnitt-Ansicht einer erfindungsgemäßen elektrischen Spalttopf-Kühlmittelpumpe,
Figur 2 zeigt ein Positionierungselement zusammen mit dem daran montierten Hallsensor,
Figur 3 zeigt eine erste Ausführungsform der spalttopfseitigen Formschlussstruktur,
Figur 4 zeigt den Zusammenbau des Positionierungselements mit der ersten Ausführungsform der spalttopfseitigen Formschlussstruktur,
Figur 5 zeigt eine zweite Ausführungsform der spalttopfseitigen Formschlussstruktur, und
Figur 6 zeigt den Zusammenbau des Positionierungselements mit der zweiten Ausführungsform der spalttopfseitigen Formschlussstruktur.

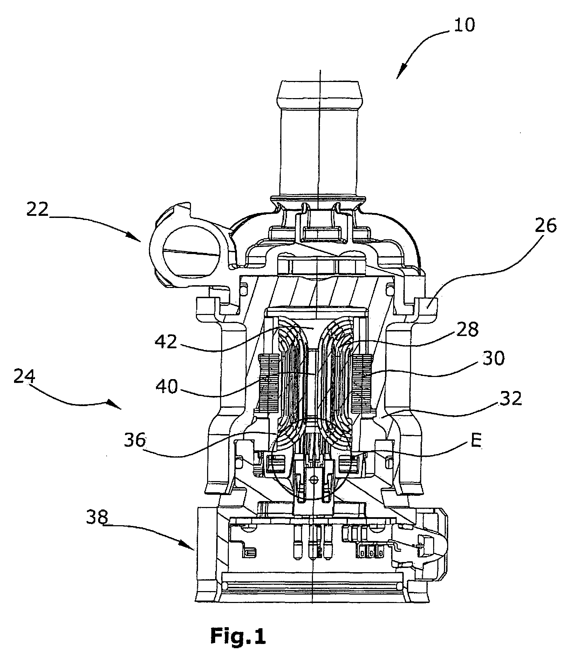

Die in der Figur 1 dargestellte elektrische Spalttopf-Kühlmittelpumpe 10 dient der Förderung eines flüssigen Kühlmittels in einem Kühlmittelkreislauf für einen Verbrennungsmotor, einem Elektromotor, die Elektronik, die Batterie etc..

Die elektrische Spalttopf-Kühlmittelpumpe 10 weist einen elektrischen Antriebsmotor 24 auf, der aus einem Motorrotor 28 und einem Motorstator 30 besteht. Der Motorrotor 28 ist drehfest auf der Motorwelle 40 angeordnet. Der Motorrotor 28 ist von Statorwicklungen des ringförmigen Motorstators 30 umgeben. In dem Zwischenraum zwischen dem Motorrotor 28 und dem Motorstator 30 befindet sich ein Spalttopf 36, der auf an sich bekannte Weise den im Inneren des Spalttopfes 36 befindlichen und von dem geförderten Kühlmittel durchströmten Naßraum 42 von dem außerhalb des Spafttopfes 36 befindlichen trockenen Statorraum 32 trennt. Der Motorrotor 28 steht über die Motorwelle 40 mit einem Pumpenmodul 22 in Antriebsverbindung. Der Motorrotor 28 läuft als Naßläufer in dem im Inneren des Spalttopfes 36 befindlichen Kühlmittel um.

An dem pumpenmodulabgewandten Ende des Spalttopfes 36 befindet sich in dem mit E (Einzelheit) gekennzeichneten Bereich ein Hallsensor 64 zur Erfassung der Position des Motorrotors 28. Der Hallsensor 64 ist am Spalttopf 36 befestigt.

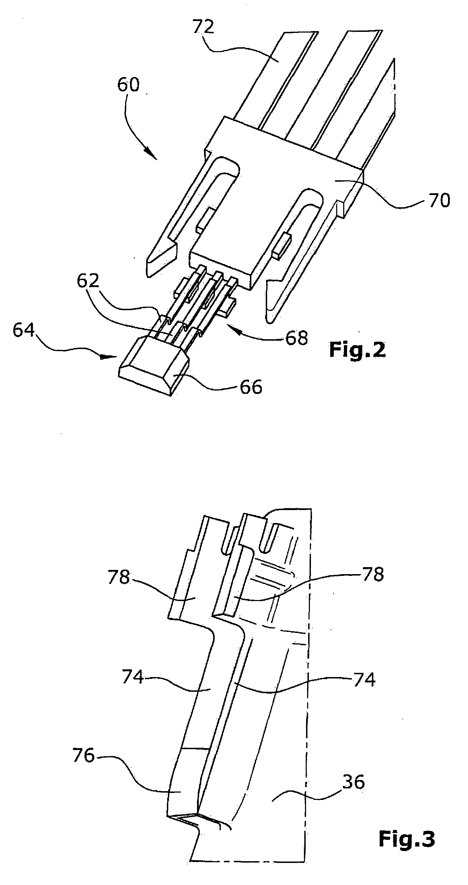

Die Figuren 2 bis 6 zeigen die in Figur 1 gekennzeichnete Einzelheit E in zwei verschiedene Ausführungsformen.

In Figur 2 ist das Positionierungselement 60 dargestellt, welches mit dem Hallsensor 64 verbunden ist. Die Befestigung des Positionierungselementes 60 in die spalttopfseitige Formschlussstruktur 78 wird durch einen kunststoffgespritzen Verbindungskörper 70 realisiert. Ausgehend von dem Verbindungskörper 70 verlaufen steife Anschlussleitungen 62 zu dem Hallsensor 64. Die Anschlussleitungen 62 werden durch einen Stanzkamm 68 gebildet. Der Hallsensor 64 weist einen Sensorkopf 66 auf. Der Sensorkopf 66 des Hallsensors 64 ist somit über seine steifen Anschlussleitungen 62 elektrisch mit den Stanzkamm-Anschlussleitungen 68 und mechanisch mit dem Verbindungskörper 70 verbunden. Die steifen Anschlussleitungen 62 zwischen dem Hallsensor 64 und dem Verbindungskörper 70 überbrücken den Abstand zwischen dem Sensorkopf 66 und dem Verbindungskörper 70.

Figur 3 zeigt eine erste Ausführungsform der spalttopfseitigen Formschlussstruktur 78. Diese spalttopfseitige Formschlussstruktur 78 zeigt radial abstehende und axial verlaufende Führungsstege 74, in welche der Verbindungskörper 70 des Positionierungselementes 60 über eine Rastverbindung einrastet. Die Führungsstege 74 sind dabei vorzugsweise einstückig mit dem Spalttopf ausgebildet, beispielsweise aus Kunststoff gegossen. Neben der Kontur zum Einbringen des Verbindungskörpers 70 des Positionierungselementes 60 weist die spalttopfseitige Formschlussstruktur 78 eine schützende Kunststoff-Sensortasche 76 für das Einbringen des Sensorkopfes 66 des montierten Hallsensors 64 auf. Die Sensortasche 76 an dem Spalttopf 36 ist so ausgebildet und positioniert, dass der Hallsensor 64 radial zwischen dem Motorstator 30 und dem Motorrotors 28 möglichst rotornah angeordnet ist. In dieser Position kann mit Hilfe des Hallsensors 64 die Drehzahl und/oder die Winkelgeschwindigkeit des Motorrotors 28 genau erfasst werden.

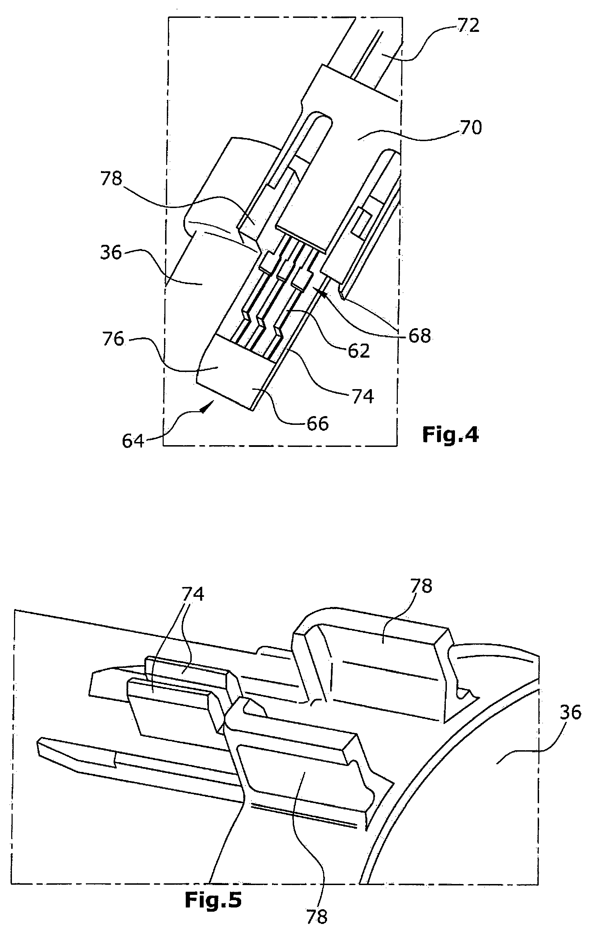

Durch den in Figur 4 dargestellten Zusammenbau wird eine sichere, genaue, einfach montierbare sowie lösbare Verbindung geschaffen, wodurch eine reproduzierbare Positionierung des Hallsensors 64 gewährleistet ist. Die steifen Anschlussleitungen 62 des Hallsensors 64 sowie der Verbindungskörper 70 des Positionierungselementes 60 greifen in die sich am Spalttopf 36 befindlichen Führungsstege 74 ein, so dass eine vibrationsarme und positionsgenaue Befestigung des Hallsensors 64 und insbesondere des Sensorkopfes 66 am Spalttopf 36 gewährleistet ist.

Figur 5 zeigt eine zweite Ausführungsform der spalttopfseitigen Formschlussstruktur 78. Diese spalttopfseitige Formschlussstruktur 78 weist ebenfalls radial abstehende und axial verlaufende Anschlussleitungs-Führungsstege 74 auf, in welche der Verbindungskörper 70 des Positionierungselementes 60 über eine Rastverbindung eingeführt und fixiert ist. Die zwei Anschlussleitungs-Führungsstege 74 sind zwischen den drei Stanzkamm-Anschlussleitungen 68 angeordnet. Im Gegensatz zu der ersten Ausführungsform weist die spalttopfseitige Formschlussstruktur 78 der zweiten Ausführungsform keine Sensortasche 76 auf.

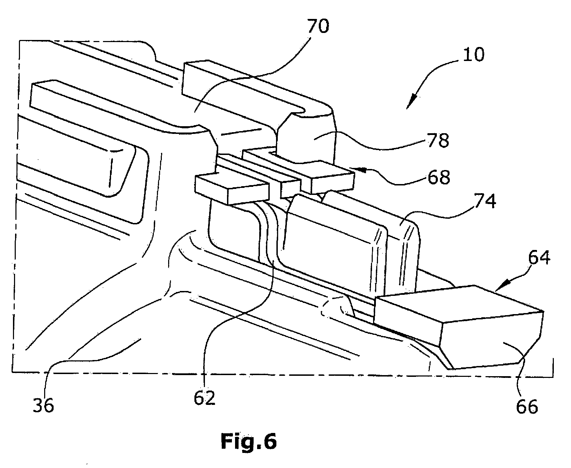

Die Figur 6 zeigt den Zusammenbau des Positionierungselementes 60 am Spalttopf 36. Durch die zwei Anschlussleitungs-Führungsstege 74 wird eine sichere elektrische Trennung der Stanzkamm-Anschlussleitungen 68 insbesondere bei auftretenden Vibrationen realisiert. Zudem ist der Sensorkopf 66 sensorkopfnah und weitgehend vibrationstolerant fixiert. Überdies kann eine Fixierung durch thermisches Umformen der Führungsstege 74 nach der Montage des Sensors erfolgen.

### Bezugszeichen-Liste

- 10: Spaltrohr-Kühlmittelpumpe
- 20: Auslassstutzen
- 22: Pumpenlaufrad
- 24: Antriebsmotor
- 26: Motorgehäuse
- 28: Motorrotor
- 30: Motorstator
- 31: Spaltraum
- 32: Trockenraum
- 36: Spalttopf/ Spaltrohr
- 38: Elektronik
- 40: Motorwelle
- 42: Naßraum
- 60: Positionierungselement
- 62: Anschlussleitungen des Hallsensors
- 64: Hallsensor
- 66: Sensorkopf
- 68: Stanzkamm
- 70: Verbindungskörper
- 72: Verbindungsleitungen
- 74: Führungsstege
- 76: Sensortasche
- 78: Formschlussstruktur

## Patentansprüche

1. Elektrische Spalttopf-Kühlmittelpumpe (10) mit einem elektrischen Antriebsmotor (24) und einem Pumpenmodul (22), wobei
das Pumpenmodul (22) durch den elektrischen Antriebsmotor (24) angetrieben wird,
der elektrische Antriebsmotor (24) ein Spaltrohr, insbesondere einen Spalttopf (36), aufweist, der einen Naßraum (42) mit einem darin angeordneten Förderfluid von einem Trockenraum (32) abgrenzt,
in dem Naßraum (42) ein permanent erregter Motorrotor (28) angeordnet ist,
in dem Trockenraum (32) ein elektronisch kommutierter Motorstator (30) angeordnet ist,
in dem Trockenraum (32) an dem Spalttopf (36) ein Hallsensor (64) zur Erfassung der Position des permanent erregten Motorrotors (28) vorgesehen ist, und
der Hallsensor (64) aus einem Sensorkopf (66) und steifen elektrischen Anschlussleitungen (62) besteht,
**dadurch gekennzeichnet,**
**dass** ein Positionierungselement (60) vorgesehen ist, das steife elektrische Anschlussleitungen (72) aufweist, die mit den korrespondierenden Anschlussleitungen (62) des Hallsensors (64) steif verbunden sind und einen elektrisch isolierenden Verbindungskörper (70) aufweist, der die Positionierungselement-Anschlussleitungen (72) hält,
wobei an der Außenseite des Spalttopfes (36) einerseits und
an dem Verbindungskörper (70) andererseits jeweils eine Formschlussstruktur (78) vorgesehen ist, durch die der Verbindungskörper (70) in einer definierten Position an dem Spalttopf (36) fixiert ist.

2. Elektrische Spalttopf-Kühlmittelpumpe (10) nach einem der vorangegangenen Ansprüche, wobei der Hallsensor (64) zur Erfassung der Lage des Motorrotors (28) radial zwischen dem Motorstator (30) und dem Spalttopf (36) angeordnet ist.

3. Elektrische Spalttopf-Kühlmittelpumpe (10) nach Anspruch 1, wobei die zum Hallsensor (64) führenden Anschlussleitungen (62) des Positionierungselementes (60) durch einen Stanzkamm (68) gebildet sind.

4. Elektrische Spalttopf-Kühlmittelpumpe (10) nach einem der vorangegangenen Ansprüche, wobei der Verbindungskörper (70) als Kunststoffkörper ausgeführt ist.

5. Elektrische Spalttopf-Kühlmittelpumpe (10) nach einem der vorangegangenen Ansprüche, wobei an dem Spalttopf (36) radiale Führungsstege (74) für das Halten der Anschlussleitungen (62) des Hallsensors (64) vorgesehen sind.

6. Elektrische Spalttopf-Kühlmittelpumpe (10) nach einem der vorangegangenen Ansprüche, wobei der Sensorkopf (66) des Hallsensors (64) in einer separaten Sensortasche (76) des Spalttopfes (36) liegt.

7. Elektrische Spalttopf-Kühlmittelpumpe (10) nach einem der vorangegangenen Ansprüche, wobei die Formschlussstruktur (78) und/oder die Sensortasche (76) und/oder die Führungsstege (74) einstückig mit dem Spalttopf (36) ausgebildet sind.

8. Elektrische Spalttopf-Kühlmittelpumpe (10) nach einem der vorangegangenen Ansprüche, wobei der Verbindungskörper (70) formschlüssig und/oder kraftschlüssig und/oder materialschlüssig an der komplementären Formschlussstruktur (78) des Spalttopfes (36) fixiert ist.

9. Elektrische Spalttopf-Kühlmittelpumpe (10) nach einem der vorangegangenen Ansprüche, wobei die Formschlussstruktur (78) des Verbindungskörpers (70) mit der Formschlussstruktur (78) des Spalttopfes (36) eine trennbare Rastverbindung gebildet wird.

10. Elektrische Spalttopf-Kühlmittelpumpe (10) nach einem der vorangegangenen Ansprüche 1 bis 8, wobei die Formschlussstruktur (78) des Verbindungskörpers (70) mit der Formschlussstruktur (78) des Spalttopfes (36) durch thermisches Verstemmen, oder eine Verklebung gesichert ist.

11. Elektrische Spalttopf-Kühlmittelpumpe (10) nach einem der vorangegangenen Ansprüche, wobei der Motorrotor (28) innenliegend und der Motorstator (30) außenliegend ausgeführt ist.

## Claims

1. An electric canned coolant pump (10) comprising an electric drive motor (24) and a pump module (22), wherein
the pump module (22) is driven by the electric drive motor (24),
the electric drive motor (24) has a split case, in particular a separating can (36), the split case being configured to separate a wet chamber (42), in which a fluid to be conveyed is provided, from a dry chamber (32),
a motor rotor (28) configured to be permanently excited is arranged in the wet chamber (42),
a motor stator (30) configured to be electronically commutated is arranged in the dry chamber (32);
a Hall sensor (64) is arranged in the dry chamber (32) at the separating can (36) to detect a position of the permanently excited motor rotor (28),
and
the Hall sensor (64) is formed by a sensor head (66) and rigid electric connecting lines (62),
**characterized in**
**that** a positioning element (60) is provided which comprises rigid electric connecting lines (72), the electric connecting lines being rigidly connected with the corresponding. Hall sensor (64) electric connecting lines (62), the positioning element comprising an insulating connecting body (70) holding the positioning element connecting lines (72),
wherein a respective form-fit structure is provided on the outer side of the separating can (35), on the one hand, and on the connecting body (70), on the other hand, by which structure the connecting body (70) is fixed in a defined position at the separating can (36).

2. The electric canned coolant pump (10) of one of the preceding claims, wherein the Hall sensor (64) is arranged radially between the motor stator (30) and the separating can (36) to detect the position of the motor rotor (28).

3. The electric canned coolant pump (10) of claim 1, wherein the positioning element (60) electric connecting lines (62) leading to the Hall sensor (64) are formed by a punched comb (68).

4. The electric canned coolant pump (10) of one of the preceding claims, wherein the connecting body (70) is provided as a plastic material body.

5. The electric canned coolant pump (10) of one of the preceding claims, wherein the separating can (36) is provided with radial guide webs (74) for holding the Hall sensor (64) connecting lines (62).

6. The electric canned coolant pump (10) of one of the preceding claims, wherein the sensor head (66) of the Hall sensor (64) is arranged in a separate sensor pocket (76) of the separating can (36).

7. The electric canned coolant pump (10) of one of the preceding claims, wherein at least one of the form-fit structure (78), the separate sensor pocket (76), and the radial guide webs (74) are formed integrally with the separating can (36).

8. The electric canned coolant pump (10) of one of the preceding claims, wherein the connecting body (70) is fixed to the complementary separating can (36) form-fit structure (78) in at least one of a form-fitting manner, a force-fitting manner, and by bonding.

9. The electric canned coolant pump (10) of one of the preceding claims, wherein the connecting body (70) form-fit structure (78) is configured to form a detachable locking connection with the separating can (36) form-fit structure (78).

10. The electric canned coolant pump (10) of one of the preceding claims 1 to 8, wherein the connecting body (70) form-fit structure (78) is secured with the separating can (36) form-fit structure (78) by thermal caulking or glue.

11. The electric canned coolant pump (10) of one of the preceding claims, wherein the motor rotor (28) is provided as an internal rotor and the motor stator (30) is provided as an external stator.

## Revendications

1. Pompe électrique (10) à pot à gaine pour fluide de refroidissement, comprenant un moteur électrique d'entrainement (24) et un module de pompe (22), dans laquelle
le module de pompe (22) est entrainé par le moteur électrique d'entrainement (24),
le moteur électrique d'entrainement (24) comprend une tube à gaine, particulièrement un pot à gaine (36), délimitant un espace humide (42), dans lequel est prévu un fluide à refouler, d'un espace sec (32),
un rotor de moteur (28) à excitation permanente est disposé dans l'espace humide (42),
un stator de moteur (30) à commutation électronique est disposé dans l'espace sec (32),
dans l'espace sec (32), un capteur Hall (64) est prévu sur le pot à gaine (36) pour la détection de la position du rotor de moteur (28) à excitation permanente, et
le capteur Hall (64) est constitué par une tête de capteur (66) et des lignes de connexion (62) électrique rigides,
**caractérisée en ce**
**qu'**un élément de positionnement (60) est prévu, qui comprend des lignes de connexion (72) électrique rigides reliées de manière rigide aux lignes de connexion (62) électrique rigides correspondantes dudit capteur Hall (64), et qui comprend un corps de liaison (70) électriquement isolant, qui tient les lignes de connexion (72) dudit élément de positionnement,
une structure d'engagement positif (78) étant prévue respectivement sur l'extérieur du pot à gaine (36), d'une part, et sur le corps de liaison (70), d'autre part, la structure fixant le corps de liaison (70) dans une position définie sur le pot à gaine (36).

2. Pompe électrique (10) à pot à gaine pour fluide de refroidissement selon l'une quelconque des revendications précédentes, dans laquelle le capteur Hall (64) est disposé radialement entre le stator de moteur (30) et le pot à gaine (36) pour détecter la position du rotor de moteur (28).

3. Pompe électrique (10) à pot à gaine pour fluide de refroidissement selon la revendication 1, dans laquelle les lignes de connexion (72) dudit élément de positionnement (60) sont formées par un peigne estampé (68).

4. Pompe électrique (10) à pot à gaine pour fluide de refroidissement selon l'une quelconque des revendications précédentes, dans laquelle le corps de liaison (70) est sous forme d'un corps en matière plastique.

5. Pompe électrique (10) à pot à gaine pour fluide de refroidissement selon l'une quelconque des revendications précédentes, dans laquelle le pot à gaine (36) est muni de nervures de guidage (74) radiales pour retenir les lignes de connexion (62) dudit capteur Hall (64).

6. Pompe électrique (10) à pot à gaine pour fluide de refroidissement selon l'une quelconque des revendications précédentes, dans laquelle la tête de capteur (66) du capteur Hall (64) est située dans une poche à capteur (76) séparée du pot à gaine (36).

7. Pompe électrique (10) à pot à gaine pour fluide de refroidissement selon l'une quelconque des revendications précédentes, dans laquelle la structure d'engagement positif (78) et/ou la poche à capteur (76) et/ou les nervures de guidage (74) sont formées d'un seul tenant avec le pot à gaine (36).

8. Pompe électrique (10) à pot à gaine pour fluide de refroidissement selon l'une quelconque des revendications précédentes, dans laquelle le corps de liaison (70) est fixé sur la structure d'engagement positif (78) du pot à gaine (36) par engagement positif et/ou par adhérence et/ou liaison de matière.

9. Pompe électrique (10) à pot à gaine pour fluide de refroidissement selon l'une quelconque des revendications précédentes, dans laquelle la structure d'engagement positif (78) du corps de liaison (70) forme une liaison d'encliquetage séparable avec la structure d'engagement positif (78) du pot à gaine (36).

10. Pompe électrique (10) à pot à gaine pour fluide de refroidissement selon l'une quelconque des revendications précédentes 1 à 8, dans laquelle la structure d'engagement positif (78) du corps de liaison (70) est sécurisée à la structure d'engagement positif (78) du pot à gaine (36) par matage thermique ou par collage.

11. Pompe électrique (10) à pot à gaine pour fluide de refroidissement selon l'une quelconque des revendications précédentes, dans laquelle le rotor de moteur (28) est situé à l'intérieur et le stator de moteur (30) est situé à l'extérieur.
